# EUROPEAN PATENT APPLICATION

(11) **EP 1 677 270 A1**
(43) Date of publication of application: **05.07.2006**
(21) Application number: 04466035.5
(22) Date of filing: 31.12.2004
(51) Int. Cl.: G08C 17/02, G01D 4/00

(54) **Method of automatic meter reading**

(71) Applicant: Tomas, Hejl, 15000 Prague (CZ)
(72) Inventor: Tomas, Hejl, 15000 Prague (CZ)

(57) **Abstract**

Automatic meter reading (AMR) is measuring of consumption of media (e.g. electricity, cold water, hot water, gas, heat energy), transmission and processing of measured values. The measuring is performed by meters (e.g. electricity, water, gas, heat energy meters), the measured values are gathered by gathering units (e.g. electricity meters, terminal units) and transmitted to concentrator (e.g. industry computer). Three types of connections are used: LPRB (low power radio or bluetooth), PLC (power line communication), MC (mobile connection).

A new method how to construct AMR networks is suggested, using the gathering units, which perform the conversion of LPRB to PLC; i.e. include at least one LPRB input and PLC output; i.e. have at least one LPRB connection with the meter and PLC connection with the concentrator. Also such gathering units, which perform the LPRB->PLC conversion, are claimed to be patented.

By using this method, optimal connections in AMR networks can be realized.

## Description

### Field

The present invention relates to a method of automatic meter reading (AMR) of media (electricity, cold water, hot water, gas, heat energy...) consumption, i.e. measurement, transmission of measured values to gathering units and concentrators and processing of these values.

### Background

Objects (blocks of flats, flats, family houses, weekend houses, small industry buildings, buildings in rural area...) are supplied with various media (electricity, cold water, hot water, gas, heat energy...), which are necessary for the functioning of these objects. The media consumption is measured.

The measurements (metering) are performed by meters, e.g. electricity meters, water meters, gas meters, heat energy meters. These measurements are done for the purposes of billing, control, statistics etc. To gather the measured values from a part of an object, from one object or from several objects, e.g. from some flats, from one block of flats or from several family houses, gathering units are used; e.g. electricity meters or terminal units. To concentrate and process the measured values from some geographical area, a concentrator is established, usually an industry computer. Several meters are usually connected to one gathering unit. Several gathering units are usually connected to one concentrator. Electricity meters can be used as meters and also as gathering units.

Such networks, which consist from meters, gathering units, concentrators and transmission lines, and which perform measurements of media consumption, transmission and processing of measured values, are called AMR networks.

For the connection of the meters to the gathering units and for the connection of the gathering units to the concentrator, i.e. for the automatic transmission of the measured values, there are used three types of connection:
- LPRB (low power radio or bluetooth)
- PLC (power line communication, using mains)
- MC (mobile communication, e.g. via mobile phones)

The advantages of each of these three types of connection are complementary; the advantage of one type is usually disadvantage of the other types. The advantage of LPRB is low price and easy integration of meters; the disadvantage of LPRB is the range, for longer distances or because of construction of some buildings the LPRB repeaters are necessary. The advantage of PLC is the range, which is independent of the construction of the building; the disadvantage of PLC is that every meter must be connected to mains (power line or wire must lead at or near the meter). The advantage of MC is that usually no gathering unit is necessary and the meters can be connected directly to the concentrator; the disadvantage of MC is the price, as such connected meters must contain parts for mobile communication, e.g. GSM modem or UMTS modem.

From the advantages and disadvantages of the three types of connection follows, that in most cases one optimal type of connection of the meter to the gathering unit and one optimal type of connection of the gathering unit to the concentrator can be determined. Electricity meters are preferably connected by PLC, as they are connected to mains. Water, gas and heat energy meters are usually connected by LPRB, as it is difficult to connect them to mains (conduct power line to them). However optimal connection depends also on the construction and properties of the object, where the AMR network is constructed, and/or on the price of the components, from which the connection is constructed. E.g., in some cases, the electricity meters can be connected to the gathering unit by LPRB. Or, in other cases, the non electricity meters can be situated near the mains and connected by PLC.

In existing solutions for the AMR networks, the gathering units either use the same type of connection for input data and output data; or convert PLC to LPRB; or convert PLC or LPRB on input to MC on output. Already used combinations of input->output relations in the gathering units are: LPRB->LPRB, LPRB->MC, PLC->PLC, PLC->LPRB, PLC->MC. When the meters are connected by MC, then usually the meters are connected directly to the concentrator and the gathering units are missing.

In existing solutions for the AMR networks, the combinations of input->output on the gathering units are restricted, so that the meters and the gathering units may be connected not optimally. Using LPRB to connect the electricity meters is usually not good, as the electricity meters have natural connection to mains. Using PLC to connect the meters without natural connection to mains (water meter, gas meter, heat energy meter...) is usually complicated, as the wire with low voltage has to connect the meter and the gathering unit. Or there are separate systems for the electricity meters and separate systems for the non electricity meters. But in practice, multi-utility solution is needed.

### Summary of the Invention

In the AMR networks, the new solution to be patented uses also such gathering units, which convert LPRB to PLC, i.e. there is input->output pair LPRB->PLC. With this solution, LPRB and PLC can be combined on inputs and outputs of the gathering units. This enables to connect each meter in such a way, that the type of connection is advantageous (optimal) for this meter. And also the type of connection between the gathering unit and the concentrator can be determined optimally.

E.g. within several flats or within one family house, the electricity meter(s) will be connected to the gathering unit by PLC, the other meters (the water meter, the gas meter, the heat energy meter) will be connected to the gathering unit by LPRB. The gathering unit will be connected to the concentrator by PLC (mains).

### Brief Description of the Drawings

Further features and advantages will be apparent from the following detailed description, given by way of examples, of a preferred embodiment taken in conjunction with the accompanying drawings, wherein:

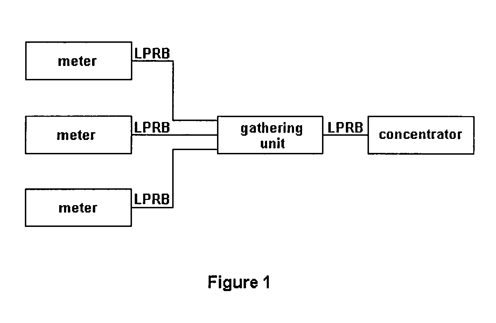

Fig. 1 is a schematic diagram of a part of an AMR network, where all the connections between the meters and the gathering unit are realized by LPRB and the connection between the gathering unit and the concentrator is realized also by LPRB. The gathering unit performs the transmission LPRB->LPRB. This is existing solution.

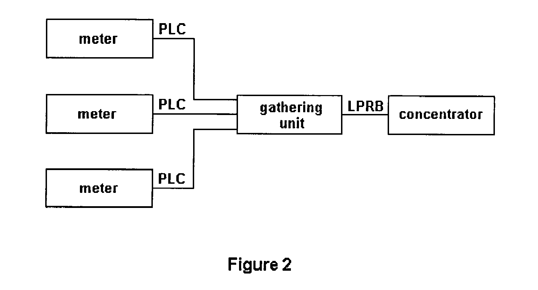

Fig. 2 is a schematic diagram of a part of an AMR network, where all the connections between the meters and the gathering unit are realized by PLC and the connection between the gathering unit and the concentrator is realized by LPRB. The gathering unit performs the conversion PLC->LPRB. This is existing solution.

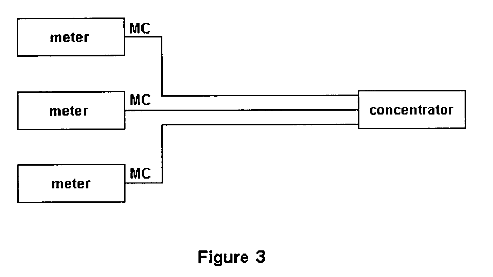

Fig. 3 is a schematic diagram of a part of an AMR network, where the gathering unit is omitted and all the connections between the meters and the concentrator are realized directly by MC. This is existing solution.

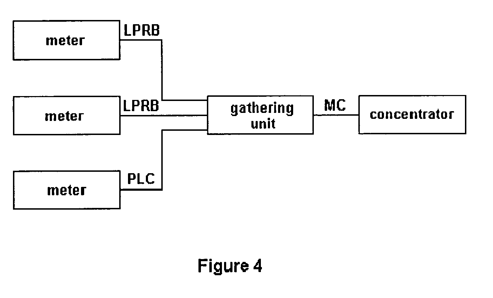

Fig. 4 is a schematic diagram of a part of an AMR network, where some connections between the meters and the gathering unit are realized by LPRB and some connections are realized by PLC. The connection between the gathering unit and the concentrator is realized by MC. The gathering unit performs the conversion LPRB+PLC->MC. This is existing solution.

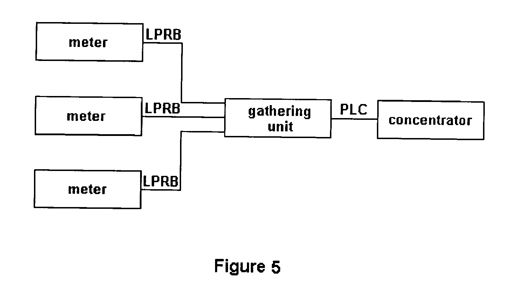

Fig. 5 is a schematic diagram of a part of an AMR network, where all the connections between the meters and the gathering unit are realized by LPRB and the connection between the gathering unit and concentrator is realized by PLC. The gathering unit performs the conversion LPRB->PLC. This is new solution to be patented.

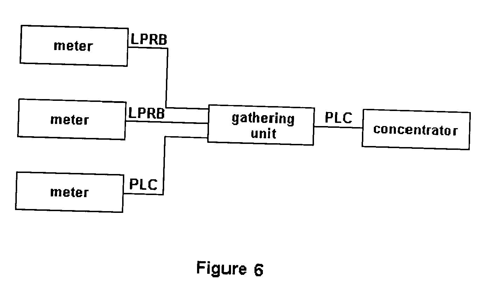

Fig. 6 is a schematic diagram of a part of an AMR network, where some connections between the meters and the gathering unit are realized by LPRB and some connections between the meters and the gathering unit are realized by PLC. The connection between the gathering unit and the concentrator is realized by PLC. The gathering unit performs the conversion LPRB+PLC->PLC. This is new solution to be patented.

### Detailed Description with Reference to the Drawings

Figures 1, 2, 3 and 4 represent existing solutions; figures 5 and 6 represent new solution to be patented.

Referring to Figure 1, all the meters are connected to the gathering unit by LPRB. This may be disadvantageous for example for the electricity meter, as this meter is usually connected by PLC (the electricity meter is of course connected to mains). And if, moreover, the electricity meter is situated far from the gathering unit or the electricity meter is separated from the gathering unit by construction walls of the building, then it is difficult and expensive to design the topology of the AMR network and the positions of radio waves repeaters, so that the LPRB transmissions are reliable.

Referring to Figure 2, all the meters are connected to the gathering unit by PLC. If, for example, there are no mains available near the water, gas and/or heat energy meters, it is necessary to conduct the mains to these meters, which is again difficult and expensive.

Referring to Figure 3, all the meters are connected directly to the concentrator by MC. Such solution is again relatively difficult and expensive, as all the meters must be equipped by equipment for mobile communication, e.g. GSM modem or UMTS modem.

Referring to Figure 4, some meters are connected to the gathering unit by LPRB, some meters are connected to the gathering unit by PLC; the gathering unit is connected to the concentrator by LPRB. If the electricity meter is used as the gathering unit and the industry computer is used as the concentrator, then the LPRB connection of the gathering unit to the concentrator is usually more expensive and difficult than the PLC connection (the electricity meter and the industry computer are connected to mains).

Referring to Figure 5, all the meters are connected to the gathering unit by LPRB; the gathering unit is connected to the concentrator by PLC. This is good solution e.g. in case, that no meter connected to the gathering unit is electricity meter and if the electricity meter is used as meter and also as the gathering unit. In this case every meter can be connected to the gathering unit using the optimal type of connection. The PLC connection between such gathering unit and the concentrator is mostly the best of the connection types (the electricity meter and the industry computer are connected to mains). In some situations (given by the construction and properties of the object where the AMR network is constructed and/or given by the price of connection components), the electricity meter can be optimally connected to the gathering unit by LPRB. In such case, one of the meters, connected to the gathering unit, can be electricity meter and the gathering unit can be realized by other electricity meter or by the terminal unit.

Referring to Figure 6, some meters are connected to the gathering unit by LPRB, some meters are connected by PLC; the gathering unit is connected to the concentrator by PLC. This is very good solution, as every meter can be connected to the gathering unit using the optimal type of connection; moreover if the electricity meter is used as the gathering unit and the industry computer is used as concentrator, then the PLC connection between the gathering unit and the concentrator is mostly the best of the connection types (the electricity meter and the industry computer are connected to mains).

Accordingly, while this invention has been described with reference to illustrative embodiments, this description is not intended to be construed in a limiting sense. Various modifications of the illustrative embodiments, as well as other embodiments of the invention, will be apparent to persons skilled in the art upon reference to this description. It is therefore contemplated that the appended claims will cover any such modifications or embodiments as fall within the true scope of the invention.

### Industrial Application of the Invention

New solution to be patented, i.e. suggested method of automatic meter reading, can be applied to construct optimal connections in the AMR networks. Main application branches are measurement, regulation, automation, power engineering, electrical engineering, civil engineering and mechanical engineering. Based on the type of the meter (electricity meter, water meter, gas meter, heat energy meter...), the gathering unit (electricity meter, terminal unit...) and the concentrator (industry computer), optimal connections between them can be derived and established. So the costs of the AMR networks are reduced and such networks are more reliable, than it was using the existing solutions.

## Claims

1. Method of constructing and providing automatic meter reading (AMR) networks, where consumption of media (e.g. electricity, cold water, hot water, gas, heat energy) is measured in objects (e.g. block of flats, family houses), areas, parts of said objects and/or parts of said areas, comprising:
(a) meters to measure said consumption of media (e.g. electricity meters, water meters, gas meters, heat energy meters); said meters are gaining measured values
(b) gathering units to gather said measured values (e.g. electricity meters, terminal units)
(c) concentrators to concentrate and process said measured values (e.g. industry computer)
(d) connections of said meters to said gathering units and of said gathering units to said concentrators, to transmit said measured values; types of said connections are e.g. LPRB (low power radio or bluetooth), PLC (power line communication), MC (mobile connection)
(e) at least one of said gathering units performing conversion of at least one of said connections from said LPRB type to said PLC type (LPRB->PLC conversion); i.e. including at least one of said connections on input realized by said LPRB type and at least one of said connections on output realized by said PLC type; i.e. having some of said connections to said meters realized by said LPRB type and some of said connections to said concentrators realized by said PLC type.

2. The method of claim 1; including a plurality of said meters, a plurality of said gathering units (at least one of them performing said LPRB->PLC conversion), a plurality of said concentrators and a plurality of said connections.

3. Such of said gathering units, which perform said LPRB->PLC conversion.
